# EUROPEAN PATENT SPECIFICATION

(11) **EP 1 879 773 B1**
(45) Date of publication and mention of the grant of the patent: **02.05.2012**
(21) Application number: 06749992.1
(22) Date of filing: 10.04.2006
(51) Int. Cl.: B60R 21/20, B60R 21/16

(54) **CURTAIN AIRBAG ASSEMBLY**
VORHANGAIRBAGANORDNUNG
ENSEMBLE COUSSIN DE SECURITE RIDEAU

(30) Priority: 10.05.2005 US 679593 P
(43) Date of publication of application: 23.01.2008
(73) Proprietor: KEY SAFETY SYSTEMS, INC., Sterling Heights, MI 48313 (US)
(72) Inventor: WIPASURAMONTON, Pongdet, P., Rochester, Michigan 48307 (US); YOUNG, Jeffrey, Pudong, Shanghai 200120 (CN); JU, Chang-Hwan, Rochester, Michigan 48307 (US); PADIYAR, Prabhakar, Sterling Heights, Michigan 48313 (US)
(74) Representative: Gislon, Gabriele
(86) International application number: PCT/US2006/013802
(87) International publication number: WO 2006/121567

(56) References cited:
- DE-U1- 20 216 339
- GB-A- 2 397 806
- US-A1- 2003 094 798
- US-A1- 2004 104 561
- US-A1- 2005 023 807
- US-B1- 6 231 073
- US-B1- 6 336 654
- US-B2- 6 450 527
- US-B2- 6 802 530

## Description

US 20051023807 discloses a curtain airbag according to the preamble of claim 1, that has a plurality of inflatable chambers juxtaposed in the front-rear direction, that are in communication with a gas passage which includes a joint between inflatable chambers.

DE 20216339 discloses a side gas bag retention system having a gas conduit tube connected axially with a gas generator and having one outflow aperture for gas which is diverted downwardly in relation to the axial direction of the gas generator into the airbag. The airbag is a single chamber.

US 2004/104561 discloses an head side airbag containing a perforated cloth diffuser and a perforated cushion deflector that contains a wall defining one orifice for attenuating gas flow upon airbag activation. The outer fabric is sewn to maintain a plurality of individual cell areas and the diffuser openings are positioned generally over the individual cells to facilitate substantially even inflation throughout the airbag. US2003/094798 discloses a head protecting airbag device comprising an airbag and an inflator for feeding an inflating gas to the airbag. The airbag includes an inflation portion and one cylindrical connection port portion arranged at generally the middle in the vehicle longitudinal direction of the upper edge of the airbag and formed to communicate with the inflation portion, protruding upward from the inflation portion. GB2397806 discloses an air-bag provided with a gas generator unit mounted to supply gas to a gas inlet in a central region of one edge of the air-bag. The airbag has a gas generator and internal gas deflector located within the gas Inlet of the air-bag.

The present invention relates to an improved curtain airbag for vehicles.
Figure 1 is a plan view of a first embodiment of the invention.
Figure 2 is a plan view of a second embodiment of the invention.
Figure 3 is a plan view of a diffuser.
Figure 4 is an enlarged view showing the connection between an inflator and a fill tube.
Figures 5 and 5a illustrate a solid fill tube,
Figure 6 shows an alternate embodiment of a diffuser.
Figures 7 and 7a show alternate embodiments of a fill tube not according to the invention.
Figure 8 is a cross-section of portions of the diffuser, fill tube and airbag.
Figure 9 shows an alternate embodiment of the invention.

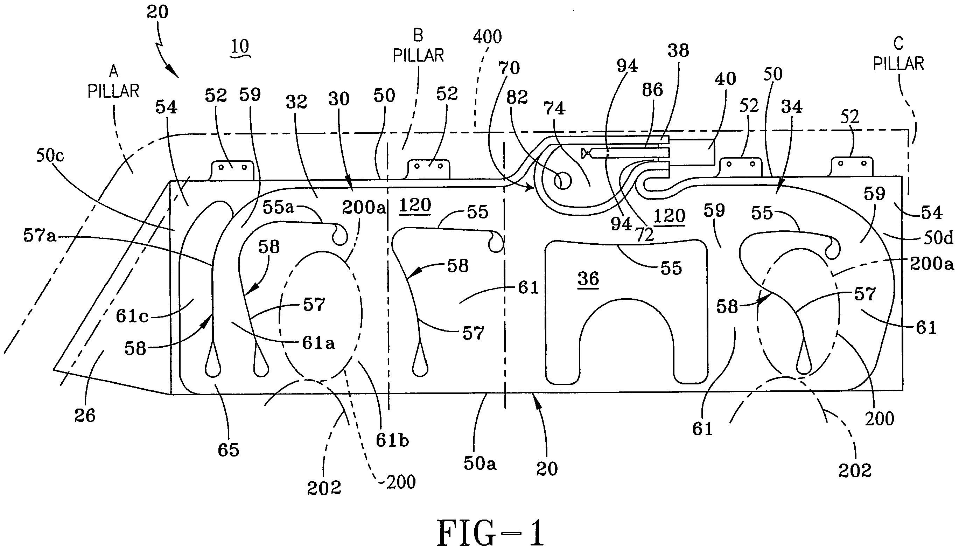

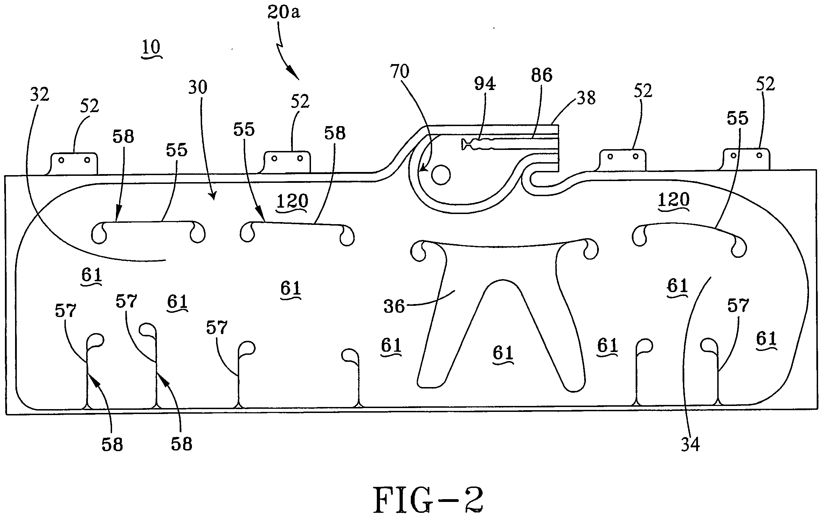

Figures 1 and 2 show versions of a center-fill curtain airbag 20, 20a. A curtain airbag is typically arranged to extend along the roof rail 400 of a vehicle, above the vehicle door or doors. The airbag is maintained in a folded condition along the roof rail 400 and covered by a protective housing or trim piece (not shown) at the roof rail. The airbag deploys through this protective housing or trim piece as a curtain to cover the interior side of the passenger compartment to protect the head and shoulder of a vehicle occupant 200, 202. Each of the airbags 20, 20a has an inflatable volume 30 that is separated into inflatable portions. The inflatable volume 30 in the illustrated embodiments is subdivided into a forward 32 and/or rearward 34 inflatable volume separated by a large uninflatable region 36. Each airbag includes an inlet 38 arranged between the forward and rearward inflatable volumes or chambers. The inlet 38 communicates with a source of inflation gas such as an airbag inflator 4-0.

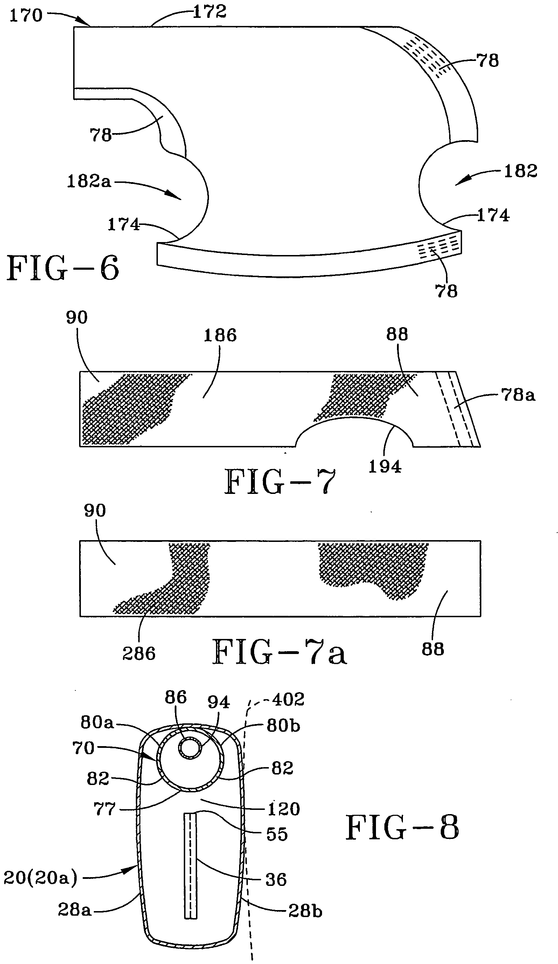

The top, or top portions, 50 of the inflatable parts of the airbag are formed with tabs 52, permitting the airbag to be mounted to and secured to the roof rail. Each airbag 20, 20a is formed utilizing woven fabric configured to inflate upon receipt of inflation gas. Either airbag can be manufactured utilizing a one-piece-woven technique in which the airbag is made on a Jacquard loom. This known type of weaving technique creates peripheral non-inflatable regions or edge borders 54, the non-inflatable region 36, and various joints, seams or tethering links 58 that join the inner and outer panels of the airbag. The inner and outer panels form two opposing sides. Upon inflation, the outer panel or outer side 28b will lie adjacent the door or vehicle interior facing side 402, and inner panel or inner side 28a will face the interior of the passenger compartment of the vehicle as shown in Figure 8. The seams or joints 58 are employed to reduce the inflatable volume of the airbag. The edge border, non-inflatable regions and joints could be formed if the airbag were constructed using a more conventional sewing technique.

The joints or seams 58 are separated from the non-inflatable region 36. An edge border 54 subdivides the forward and rearward inflatable volumes 32, 34 into adjacent inflatable regions 61, 61 a, 61 b and 61 c. The top portions, or tops, 55 of each joint or seam 58 are spaced from the top 50 of the airbag and form a gas distribution channel 120. In Figure 1 many of the joints or seams 58 are configured with a flat top 55 and descending leg 57. The spacing between each individual joint or seam 58 and the spacing between each joint or seam and the top and bottom of the airbag is chosen to control the flow of inflation gas to each of the inflatable regions 61. For example, the spacing of a top portion 55a of one of the joints 58 relative to the top of the airbag is made to initially reduce the gas flow to an inflatable region 61 a that is situated in front of the region 61 b, which is adjacent the head of a vehicle occupant seated in the front seat of the vehicle. By restricting the gas flow to one region 61a, 61c, the gas flow to another region 61b is increased, causing the inflatable regions of the airbag adjacent the head of a vehicle occupant to be protected to inflate more rapidly and be positioned adjacent the vehicle occupant.

The top 55 of each seam 58 forms the gas distribution channel 120. The descending leg portion 57 of each seam separates the forward and rearward inflatable regions of the airbag into the smaller regions 61, 61 a, 61 b, and 61 c. The top portions 55 of each joint 58 are spaced from one another to provide openings 59 within the gas distribution channel 120, permitting inflation gases to pass into the adjacent inflatable regions 61-61 c. The forwardmost inflatable region 61 c is between a forward border 54 and the leg 57a. The entrance to region 61 c is through a small opening 65 located at the bottom 50a of the airbag. During inflation of the airbag the inflation of this forward region will be delayed relative to the inflation of regions 61b proximate the location of the vehicle occupant's head 200a.

The forward border 54 of the airbag is connected to the A-pillar of the vehicle through a flexible panel 26 of airbag fabric that does not need to be inflatable. The inflator 40 is mounted to the roof rail in an appropriate manner. The rear border 54 of the airbag is adapted to be mounted to a rear pillar of the vehicle such as at the C or D pillar of the vehicle.

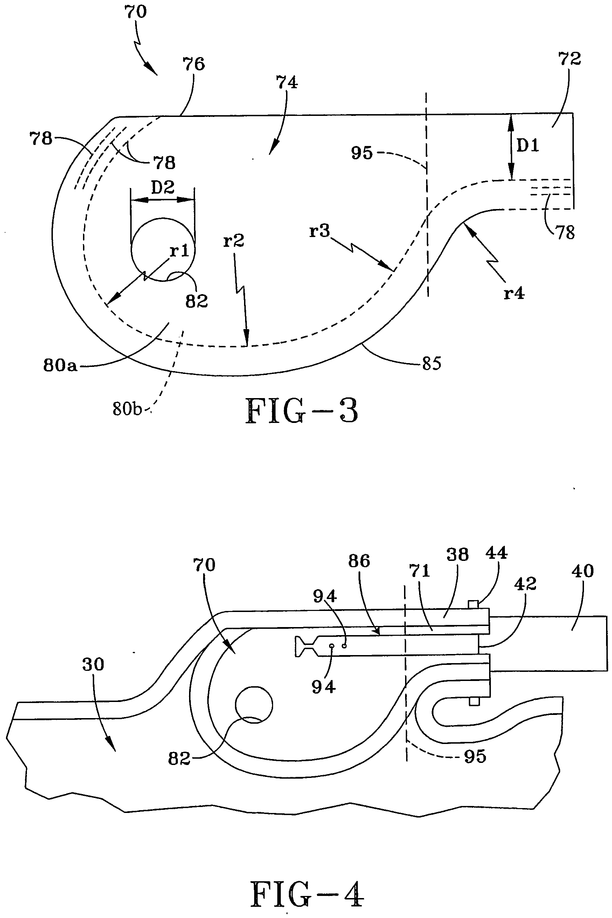

The inlet 38 is elevated relative to the top portions 50 of the inflatable regions of the airbag and is adapted to be connected to an inflator 40. The airbag 20, 20a includes a diffuser 70. The diffuser includes a neck 72 and a chamber 74. The neck is also adapted to communicate with the inflator 40. Figure 3 shows the diffuser in a flat, uninflated condition. The neck 72 is shown having a diameter of D1. The neck 72 is in communication with a larger volume or chamber 74.

In the illustrated embodiment the diffuser 70 is constructed of a double layer of woven fabric, having for example a denier of 630, which is folded about a centerline 76 and sewn, typically multiple times, together along one or more seams 78 to provide the shape illustrated. In the preferred embodiment the double layer of fabric forming the diffuser 70 is laser cut. The laser cut line welds the woven nylon fabric together along the registered edges 85. The diffuser 70 has two sides 80a, 80b, but only one side 80a can be seen in Figure 3. Each side includes an opening 82 having a diameter D2. The seams 78 forming a chamber 74 are arranged to provide the chamber 74 with a concave shape. The seams are arranged to provide the diffuser with a shape provided by radii r1, r2, r3 and r4. The radii r1, r2 and r3 are, for example only, 70 mm, 100 mm and 80 mm. The seams also form a curved transition with a radius r4 from the chamber 74 to the neck 72. The arrangement of the seams 78 in this transition region provides a concave construction except in the r4 region.

In Figure 2 the airbag 20a is of similar construction to airbag 20. The leg portions 57 of the seams 58 are not connected to the top sections 55. In this embodiment the leg portion 57 extends radially inward from an outer edge of the inflatable portions of the airbag. The regions of the airbag between the upper portions 55 and leg portions 57 define the various inflatable regions 61 of the airbag.

Figure 4 is an enlarged view of the inlet area of the airbag of Figures 1 and 2. In Figure 4 the inflator 40 includes a gas exit port 42 that is connected to a fill tube 86. The inflator 40 is preferably an axial flow inflator in which inflation gas exits the inflator or an adaptor secured to the inflator in an axial direction.

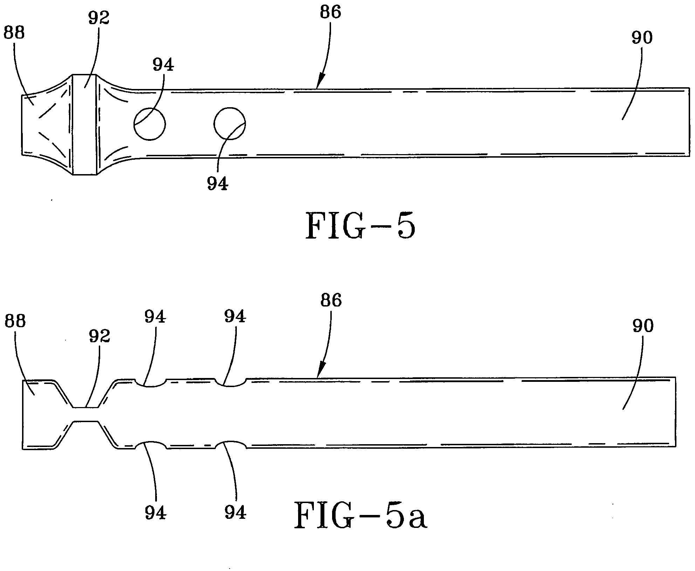

A fill tube 86 is illustrated in Figures 1, 2, 3, 5 and 5a. The fill tube 86 is a hollow metal tube, preferably non-flexible, having a circular cross-section and an end 88 and an opposite end 90. The end 88 of the fill tube that is distal from the inflator is crimped 92 preventing airflow through open end 88. The fill tube 86, upstream of the crimp 92, includes at least one set of gas exit ports 94 with ports located on opposite sides of the fill tube. In the illustrated embodiment the fill tube has two sets of openings 94. The end 90 of the fill tube that is proximal to the inflator is hollow and circular in cross-section and adapted to be fitted to a gas exit port 42 of the inflator 40. The fill tube 86 can be connected to the inflator 40 utilizing an intermediate connection member such as crimping or by using a clamp. The inlet 38 of the airbag 20, as well as the neck 72 of the diffuser 70, is secured about the inflator 40 by a clamp 44 as shown in Figure 4.

In the illustrated embodiment each of the openings 94 in the fill tube is oriented relative to the airbag such that inflation gases exit the fill tube 86 into the diffuser 70 in a side-to-side manner. The gas exit ports 94 of the fill tube 86 are located downstream of the transition between the convex and concave regions of the diffuser; this transition is shown by phantom line 95. The convex portion of the diffuser has a smaller diameter than that of the convex portions of the diffuser. By positioning the gas exit ports 94 at or downstream of the transition region the hoop stress generated within the diffuser is controlled. Hoop stress is directly proportional to pressure and diameter while indirectly proportional to the thickness of the stressed material. Gas flow through the end 88 of the fill tube is in the axial direction. Gas flow through the gas exit ports 94 has a significant component that is in a radial direction, perpendicular to the axial flow. The fill tube also serves to convert the gas flow from axial to radial or substantially radial in view of the crimp 92. The gas exiting the ports 94 may not be totally radial as a portion of the flow exiting the ports may still contain an axial component due to the forward movement of the inflation gas.

A benefit of the crimped hollow fill tube is that the crimping process does not introduce sharp edges on the fill tube 86. The end 88 of the fill tube, after crimping, remains smooth although somewhat deformed or elliptical in cross-section.

Figure 6 illustrates an alternate embodiment of a diffuser 170. The diffuser 170 is constructed in essentially the same manner as diffuser 70 in which one or more panels of fabric are cut, folded over a centerline 172 and sewn together at various regions by a seam 78. In the preferred embodiment the fabric is fabricated utilizing two overlapping layers of a 630 denier uncoated woven nylon fabric. The seams 78 are constructed by utilizing a plurality of four adjacent chain stitches. The diffuser 170 of Figure 6 has two semicircles 174 cut in the opposing layers of fabric. After the diffuser 170 is sewn together and the airbag is inflated, the opposing semicircles 174 will form circular gas exit ports 182, 182a positioned at the front and rear of the diffuser 170. In use, the diffuser 170 is mounted to the airbag 20 or airbag 20a in the same way as illustrated in Figures 1 and 2 for diffuser 70, but with openings or ports 182, 182a positioned pointing fore and aft relative to the airbag.

Figures 7 and 7a illustrate alternate embodiments not according to the invention of a fill tube 186, 286. Each of these fill tubes is manufactured utilizing a cylinder of woven fabric having an end 90 adapted to be connected to the inflator and another end 88. In Figure 7 the end 88 of the fill tube is sewn closed by one or more seams 78a. The head of the fill tube 186 of Figure 7 also includes a gas exit port 194 configured as a semicircular cutout in fill tube 186. The gas exit port 194, when mounted within diffuser 70, is located downstream of the transition region 95 in a manner similar to the placement of ports 94. In the embodiment shown in Figure 7a, the end 88 of the fill tube 286 is open. This open end 88 is located downstream of the transition region 95 in a manner similar to the placement of ports 94.

Upon sensing an actual or impending side impact of the vehicle, an ignition signal is sent from a control unit to an igniter associated with the inflator 40. Thereafter, inflation gas is produced and/or released. Some inflators include a quantity of stored gas, the release of which begins the inflation of the airbag; while other inflators include a solid fuel that is burnt to generate inflation gas; while still other inflators include a combination of stored gas and a solid or other type of fuel.

The inflator 40 of the present invention is preferably an axial flow inflator in which inflation gas exits the inflator in an axial direction in alignment with the axis of the inflator. Inflation gas enters the fill tube 86, 186 or 286. During the initial moments of inflation, the inflation gases exiting the inflator are often of an extremely high temperature and pressure. The fill tube directs the inflation gas to enter the diffuser 70 at a large diameter portion of the diffuser 70. This operation isolates the narrow diameter portion of the diffuser 70 from the intense pressure and temperature of the inflation gas.

One type of airbag inflator is called a cold-gas inflator. In this type of inflators, unheated compressed gas is communicated to the airbag. Prior to activating the inflator, the stored, compressed gas is at ambient temperature, which is in the range of -40° F to 140° F. In this type of inflators, the stored inflation gas is not heated as it flows out of the inflator. The igniter of this inflator is typically used to open up a port, thereby permitting the stored gas to enter into the airbag. Even though the function of the igniter is limited to opening the port, such as breaking a frangible disk, the igniter generates a significant though short-lived intense rise in temperature, well above the ambient range identified above. The construction of the present invention also protects the airbag from the above type of temperature rises.

Figure 8 is a cross-sectional view of either airbag 20 or 20a with the airbag inflated. Upon inflation, the diffuser 70 is deployed and assumes a more circular or elliptical shape as it presses against the top of the panels 24a, 24b of the airbag 20. The lower edge 77 of diffuser 70 moves upwardly from its uninflated condition toward and in line with the top 50 of the airbag 20, 20a, which more fully opens the flow path for gas distribution channel 120 located at the top of the airbag.

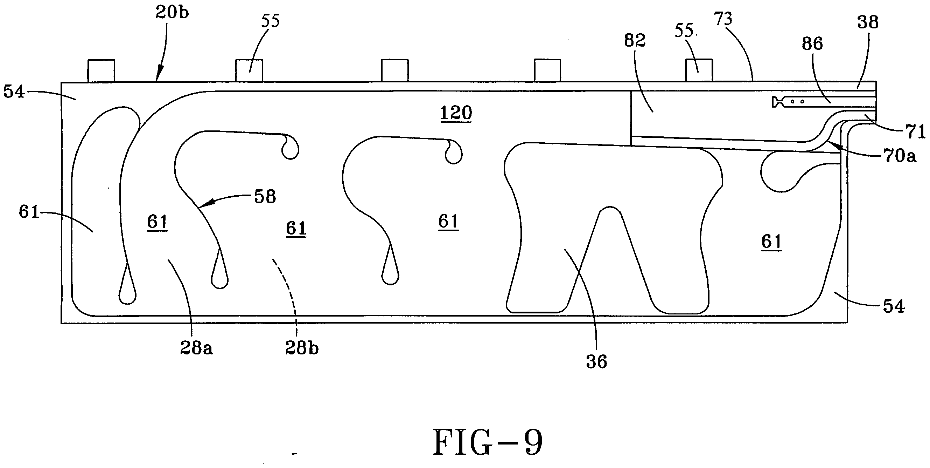

Figure 9 shows another embodiment of the invention. Airbag 20c is substantially identical to airbag 20. A major difference between these airbags is the inlet 38 has been moved to a rear of the airbag 20b. The diffuser 70a includes a narrowed neck portion 71 as does diffuser 70, however, diffuser 70a is substantially more elongated and cylindrically shaped than diffuser 70. The central portion 73 of diffuser 70a forms, when inflated, a tapered cylinder. The outlet port for passage 82 of diffuser 70a is formed by the open-ended construction of diffuser 70a.

## Claims

1. An airbag assembly (10) comprising: an inflator (40) having an axial air flow_for providing inflation gas, and an airbag (20, 20a) having a first end (50c) and a second end (50d) and a first side (28b) and a second side (28a), the airbag (20, 20a) configured to have a first inflatable chamber (32) proximate the first end (50c) of the airbag, a second inflatable chamber (34) proximate the second end (50d) of the airbag, and a non-inflatable region (76) therebetween, the airbag (20, 20a) including an inlet (38) that communicates with the inflator (40), the airbag (20, 20a) further including joints or seams (58) that connect regions of the first and second sides (28a, 28b) together thereby controlling the inflatable volume of the airbag (20, 20a), a top portion (55) of each of the joints or seams (58) is located a distance from a top (50) of the airbag (20, 20a) to form within the airbag (20, 20a) a gas distribution channel (120), the inlet (38) is spaced from the top (50) of the airbag (20, 20a) and is located between the first inflatable chamber (32) and second inflatable chamber (34), the assembly being **characterized in that** the airbag assembly includes a diffuser (70) is mounted to the inside of the airbag, the diffuser has two sides (80a, 80b) is constructed of a double layer of woven fabric which is folded about a centerline (76) and sewn together along one or more seams to provide a chamber (74) having a concave shape and a neck (72) that is adapted to communicate with the inflator and each side of the diffuser has an opening (82) for releasing gas from the diffuser into a gas distribution channel (120) within the airbag; a hollow tubular metal fill tube (86) is located within the diffuser and has first and second ends with the first end (90) fixed to the inflator for receiving gas from the inflator and the second end (88) crimped (92) to retard the flow of inflation gas therethrough, at least one set of gas exit ports (94) arranged in the fill tube to permit inflation gas exiting therefrom to exit the fill tube (86) in radial directions into the diffuser (70); the first inflatable chamber (32) and second inflatable chamber (34) are divided into adjacent inflatable regions (61), the spacing between each individual joint or seam 58 and the spacing between each joint or seam and the top and bottom of the airbag is chosen to control the flow of inflation gas to each of the inflatable regions (61), such that an inflatable region (61 b) of the airbag adjacent the head of a vehicle occupant to be protected inflate more rapidly than an inflatable region (61a, 61c) that is not adjacent the head of a vehicle occupant.

## Patentansprüche

1. Airbag-Baugruppe (10), die Folgendes umfasst: eine Aufblasvorrichtung (40), die einen axialen Luftstrom hat, um Aufblasgas bereitzustellen, und einen Airbag (20, 20a), der ein erstes Ende (50c) und ein zweites Ende (50d) und eine erste Seite (28b) und eine zweite Seite (28a) hat, wobei der Airbag (20, 20a) so konfiguriert ist, dass er eine erste aufblasbare Kammer (32) nahe dem ersten Ende (50c) des Airbags, eine zweite aufblasbare Kammer (34) nahe dem zweiten Ende (50d) des Airbags und einen nichtaufblasbaren Bereich (76) zwischen denselben hat, wobei der Airbag (20, 20a) einen Einlass (38) einschließt, der mit der Aufblasvorrichtung (40) in Verbindung steht, wobei der Airbag (20, 20a) ferner Verbindungen oder Nähte (58) einschließt, die Bereiche der ersten und der zweiten Seite (28a, 28b) miteinander verbinden, um dadurch das aufblasbare Volumen des Airbags (20, 20a) zu regeln, wobei ein oberer Abschnitt (55) jeder der Verbindungen oder Nähte (58) in einem Abstand von einem Oberteil (50) des Airbags (20, 20a) angeordnet ist, um innerhalb des Airbags (20, 20a) einen Gasverteilungskanal (120) zu bilden, wobei der Einlass (38) mit Zwischenraum von dem Oberteil (50) des Airbags (20, 20a) angeordnet ist und zwischen der ersten aufblasbaren Kammer (32) und der zweiten aufblasbaren Kammer (34) angeordnet ist, wobei die Baugruppe **dadurch gekennzeichnet ist, dass** die Airbag-Baugruppe einen Diffusor (70) einschließt, der an der Innenseite des Airbags angebracht ist, wobei der Diffusor zwei Seiten (80a, 80b) hat und aufgebaut ist aus einer doppelten Lage von Webstoff, die um eine Mittellinie (76) gefaltet und längs einer oder mehrerer Nähte zusammengenäht ist, um eine Kammer (74), die eine konkave Form hat, und einen Hals (72), der dafür eingerichtet ist, mit der Aufblasvorrichtung in Verbindung zu stehen, bereitzustellen, und jede Seite des Diffusors eine Öffnung (82) hat, um Gas aus dem Diffusor in einen Gasverteilungskanal (120) innerhalb des Airbags freizusetzen, eine hohle röhrenförmige Metall-Füllröhre (86) innerhalb des Diffusors angeordnet ist und ein erstes und ein zweites Ende hat, wobei das erste Ende (90) an der Aufblasvorrichtung befestigt ist, um Gas aus der Aufblasvorrichtung aufzunehmen, und das zweite Ende (88) gecrimpt (92) ist, um den Durchfluss von Aufblasgas durch dasselbe zu verzögern, wenigstens ein Satz von Gasaustrittsöffnungen (94) in der Füllröhre angeordnet ist, um zu ermöglichen, das Aufblasgas, das aus denselben austritt, in radialen Richtungen aus der Füllröhre (86) in den Diffusor (70) austritt, wobei die erste aufblasbare Kammer (32) und die zweite aufblasbare Kammer (34) in benachbarte aufblasbare Bereiche (61) geteilt sind, wobei der Zwischenraum zwischen jeweils einzelnen Verbindungen oder Nähten (58) und der Zwischenraum zwischen jeder Verbindung oder Naht und dem Oberteil und dem Unterteil des Airbags so gewählt ist, dass der Durchfluss von Aufblasgas zu jedem der aufblasbaren Bereiche (61) derart geregelt wird, dass ein dem Kopf eines zu schützenden Fahrzeuginsassen benachbarter aufblasbarer Bereich (61b) des Airbags schneller aufgeblasen wird als ein aufblasbarer Bereich (61a, 61c), der dem Kopf eines Fahrzeuginsassen nicht benachbart ist.

## Revendications

1. Assemblage de coussin d'air (10), comprenant : un dispositif de gonflement (40) comportant un écoulement d'air axial pour fournir du gaz de gonflement, et un coussin d'air (20, 20a) comportant une première extrémité (50c) et une deuxième extrémité (50d) ainsi qu'un premier côté (28b) et un deuxième côté (28a), le coussin d'air (20, 20a) étant configuré de sorte à comporter une première chambre gonflable (32) près de la première extrémité (50c) du coussin d'air, une deuxième chambre gonflable (34) près de la deuxième extrémité (50d) du coussin d'air, et une région non gonflable (76) entre elles, le coussin d'air (20, 20a) englobant une entrée (38) communiquant avec le dispositif de gonflement (40), le coussin d'air (20, 20a) englobant en outre des joints ou des coutures (58), connectant des régions des premier et deuxième côtés (28a, 28b), pour contrôler ainsi le volume gonflable du coussin d'air (20, 20a), une partie supérieure (55) de chacun des joints ou coutures (58) étant agencée à une certaine distance d'une partie supérieure (50) du coussin d'air (20, 20a) pour former dans le coussin d'air (20, 20a) un canal de distribution de gaz (120), l'entrée (38) étant espacée de la partie supérieure (50) du coussin d'air (20, 20a) et étant agencée entre la première chambre gonflable (32) et la deuxième chambre gonflable (34), l'assemblage étant **caractérisé en ce que** l'assemblage de coussin d'air englobe un diffuseur (70) monté vers l'intérieur du coussin d'air, le diffuseur comportant deux côtés (80a, 80b) et étant construit à partir d'une double couche de tissu tissé, repliée autour d'une ligne médiane (76) et assemblée par couture le long d'une ou de plusieurs coutures pour établir une chambre (74) ayant une forme concave, et un col (72) adapté pour communiquer avec le dispositif de gonflement, chaque côté du diffuseur comportant une ouverture (82) pour dégager le gaz du diffuseur dans un canal de distribution du gaz (120) dans le coussin d'air ; un tube de remplissage métallique tubulaire creux (86) étant agencé dans le diffuseur et comportant des première et deuxième extrémités, la première extrémité (90) étant fixée sur le dispositif de gonflement, pour recevoir le gaz du dispositif de gonflement, et la deuxième extrémité (88) étant sertie (92) pour retarder l'écoulement du gaz de gonflement à travers celle-ci, au moins un ensemble d'orifices de sortie du gaz (94) étant agencé dans le tube de remplissage pour permettre la sortie du gaz de gonflement en vue de sa sortie du tube de remplissage (86) dans des directions radiales dans le diffuseur (70); la première chambre gonflable (32) et la deuxième chambre gonflable (34) étant divisées en deux régions gonflables adjacentes (61), l'espacement entre chaque joint ou couture individuel (58) et l'espacement entre chaque joint ou couture et les parties supérieure et inférieure du coussin d'air étant choisis de sorte à contrôler l'écoulement du gaz de gonflement vers chacune des régions gonflables (61), une région gonflable (61b) du coussin d'air adjacente à la tête d'un occupant du véhicule devant être protégée étant ainsi gonflée plus rapidement qu'une région gonflable (61a, 61c) non adjacente à la tête d'un occupant du véhicule.
